# EUROPEAN PATENT APPLICATION

(11) **EP 4 488 831 A1**
(43) Date of publication of application: **08.01.2025**
(21) Application number: 23762823.5
(22) Date of filing: 24.02.2023
(51) Int. Cl.: G06F 9/451, G06F 3/0488, G06F 3/0482

(54) **MESSAGE PROCESSING METHOD AND APPARATUS**

(30) Priority: 03.03.2022 CN 202210201914
(71) Applicant: VIVO MOBILE COMMUNICATION CO., LTD., Dongguan, Guangdong 523863 (CN)
(72) Inventor: ZHAI, Haolin, Dongguan, Guangdong 523863 (CN)
(74) Representative: Lavoix
(86) International application number: PCT/CN2023/078132
(87) International publication number: WO 2023/165423

(57) **Abstract**

This application discloses a message processing method and apparatus, and pertains to the technical field of information processing. The message processing method includes: receiving a first input of a user for a first message in a session interface; in response to the first input, determining a target reference path associated with the first message, where each of the target reference paths includes at least two messages, the at least two messages are in a reference and referenced relationship, and one message in each of the target reference paths is the first message; and displaying messages that are in the target reference path.

## Description

### CROSS-REFERENCE TO RELATED APPLICATIONS

This application claims priority to Chinese Patent Application No. 202210201914.9, filed on March 3, 2022 in China, which is incorporated herein by reference in its entirety.

### TECHNICAL FIELD

This application pertains to the technical field of information processing, and in particular, to a message processing method and apparatus.

### BACKGROUND

At present, when a mobile terminal user using chat software needs to describe, explain, or reply information published by other users in a group chat, the prior art provides a reference function in which the information can be referenced by pulling up a menu through long pressing a message, and content of the user can be input additionally for other users in the group chat.

However, in a case that there is a large amount of unread information and content with a multi-layer reference relationship, a user cannot view contexts and a reference relationship of referenced information easily and quickly.

### SUMMARY

Embodiments of this application aim to provide a message processing method and apparatus, to solve a problem in the prior art that in a case that there is a large amount of unread information and content with a multi-layer reference relationship, a user cannot view contexts and a reference relationship of referenced information easily and quickly.

According to a first aspect, an embodiment of this application provides a message processing method, and the method includes:
receiving a first input of a user for a first message in a session interface;
in response to the first input, determining a target reference path associated with the first message, where each of the target reference paths includes at least two messages, the at least two messages are in a reference and referenced relationship, and one message in each of the target reference paths is the first message; and
displaying messages that are in the target reference path.

According to a second aspect, an embodiment of this application provides a message processing apparatus, and the apparatus includes:
a first receiving module, configured to receive a first input of a user for a first message in a session interface;
a determining module, configured to: in response to the first input, determine a target reference path associated with the first message, where each of the target reference paths includes at least two messages, the at least two messages are in a reference and referenced relationship, and one message in each of the target reference paths is the first message; and
a first display module, configured to display messages that are in the target reference path.

According to a third aspect, an embodiment of this application provides an electronic device. The electronic device includes a processor, a memory, and a program or an instruction stored in the memory and runnable on the processor, where the program or the instruction is executed by the processor to implement steps of the method according to the first aspect.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip, where the chip includes a processor and a communications interface, the communications interface is coupled to the processor, and the processor is configured to run a program or an instruction to implement the method according to the first aspect.

According to a sixth aspect, an embodiment of this application provides a computer program/program product. The computer program/program product is stored in a storage medium, and the computer program/program product is executed by at least one processor to implement the method according to the first aspect.

In the embodiments of this application, the first input for the first message referenced by other messages in the session interface is received, so that all the target reference paths including the first message can be automatically found, and messages in the target reference paths are displayed. In this way, the user can easily and intuitively view a reference relationship corresponding to the first message and contexts that are in a reference relationship with the first message, so that the user can quickly learn of a discussion situation of a topic related to the first message.

### BRIEF DESCRIPTION OF THE DRAWINGS

FIG. 1 is a schematic flowchart of a message processing method according to an embodiment of this application;
FIG. 2 is a schematic diagram of an option list according to an embodiment of this application;
FIG. 3 is a schematic diagram of a reference path graph according to an embodiment of this application;
FIG. 4 is a schematic diagram of a message in a first target reference path according to an embodiment of this application;
FIG. 5 is a schematic diagram of a second message and first referenced content according to an embodiment of this application;
FIG. 6 is a schematic diagram of a structure of a message processing apparatus according to an embodiment of this application;
FIG. 7 is a schematic diagram of a structure of an electronic device according to an embodiment of this application; and
FIG. 8 is a schematic diagram of a hardware structure of an electronic device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

The following specifically describes a message processing method and apparatus, an electronic device, and a readable storage medium provided in the embodiments of this application through specific embodiments and application scenarios thereof with reference to the accompanying drawings.

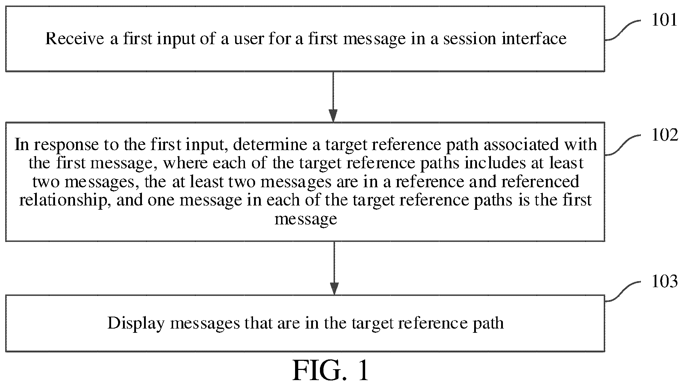

Referring to FIG. 1, FIG. 1 is a schematic flowchart of a message processing method according to an embodiment of this application. As shown in FIG. 1, an embodiment of this application provides a message processing method, and the method includes the following steps.

Step 101: Receive a first input of a user for a first message in a session interface.

In this embodiment of this application, the session interface may be a session interface of various types in instant messaging software, and in the session interface, messages sent by the user and other users may be viewed. Optionally, the user may perform editing and input in the session interface. For example, the session interface has an edit box, and the user can edit a message text in the edit box for sending.

Optionally, the first message may be a message sent by an electronic device of the user or a message sent by other users through other electronic devices. In some embodiments, the first message may be a message that is referenced by other messages. In this case, the first message is usually displayed incidentally below a message that references the first message. The first message can be referenced by only one message or by a plurality of messages. If the message that references the first message is also referenced by other messages, these messages may be in a multi-layer reference relationship.

In this embodiment of this application, optionally, the first input may be an input of long pressing the first message in the session interface, an input of long pressing the first message in the session interface and selecting an option of "message filter" in a displayed option list, or another preset input. This is not specifically limited in this embodiment of this application.

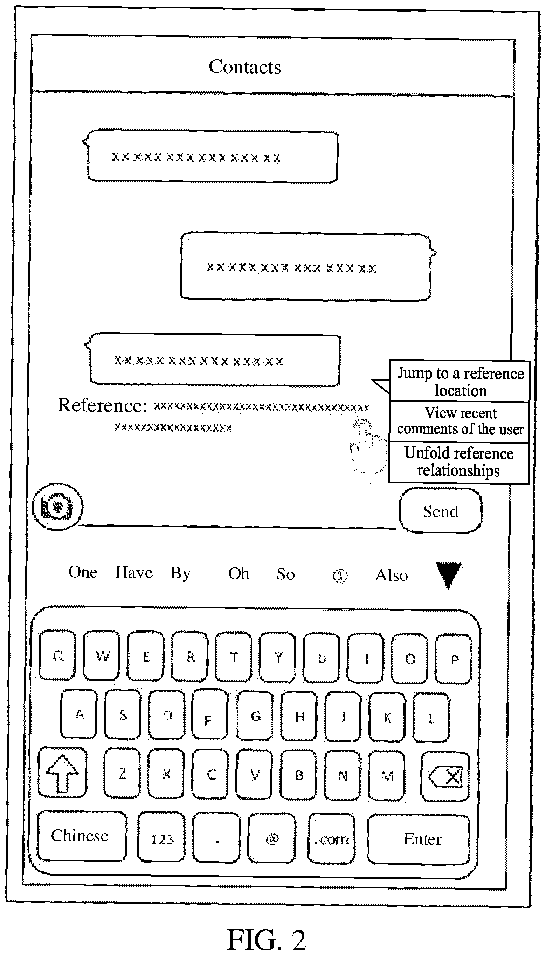

Referring to FIG. 2, FIG. 2 is a schematic diagram of an option list according to an embodiment of this application. As shown in FIG. 2, in some embodiments of this application, the electronic device displays a session interface, and a plurality of messages are displayed in the session interface. If the first input of the user for the first message is received, for example, the first input includes a first sub-input and a second sub-input, where the first sub-input is an input of long pressing the first message, the electronic device displays an option list in response to the first sub-input. The option list includes three options: "jump to a reference location", "view recent comments of the user", and "unfold reference relationships". The second sub-input is an input of clicking the option "unfold reference relationships", and then the electronic device determines a target reference path associated with the first message and displays the target reference path in response to the second sub-input.

Step 102: In response to the first input, determine a target reference path associated with the first message, where each of the target reference paths includes at least two messages, the at least two messages are in a reference and referenced relationship, and one message in each of the target reference paths is the first message.

In this step, after receiving the first input, the electronic device finds the target reference path associated with the first message in response to the first input. The reference path represents a reference relationship between a reference message and a referenced message. One reference path includes at least two messages, and two adjacent messages in the reference path are in a reference and referenced relationship. For example, when one reference path includes three messages, these three messages are in a relationship of being referenced one by one, such as a message A references a message B, while the message B references a message C. The target reference path associated with the first message is a reference path including the first message, for example, a reference path including the first message and other messages referencing the first message, or a reference path including the first message, other messages referencing the first message, and other messages referenced by the first message. It can be learned that there may be only one, or two or more target reference paths.

Step 103: Display messages that are in the target reference path.

In this embodiment of this application, after all the target reference paths associated with the first message are determined, messages in all the target reference paths can be displayed, so as to facilitate the user to quickly obtain a discussion situation of a topic corresponding to the first message, specific content of contexts corresponding to the first message, or the like, and save the time needed for the user to view all the messages that are in this time period. Optionally, the message in the target reference path may be displayed in an original session interface, or an independent window may be opened to display the message, where displaying the message in the original session interface may be: messages on a same target reference path are identified and displayed with a same color, messages on a same target reference path are identified and displayed with a same annotation around them, or the like. This is not specifically limited in this embodiment of this application.

Therefore, in this embodiment of this application, the first input for the first message referenced by other messages in the session interface is received, so that all the target reference paths including the first message can be automatically found and displayed. In this way, the user can easily and intuitively view the reference relationship corresponding to the first message and contexts that are in a reference relationship with the first message, so that the user can quickly learn of the discussion situation of the topic related to the first message.

In some embodiments of this application, in a case that there are at least two target reference paths, after determining the target reference path associated with the first message, the method further includes:
displaying the target reference paths; and
the displaying the target reference paths includes:
   displaying messages in different target reference paths in different display manners for differentiation; or
   displaying a reference path graph including all the target reference paths; or
   displaying messages in a same target reference path within a same thumbnail.

For example, after the target reference path is found, to facilitate the user to intuitively view specific content of each message in the target reference path, messages in different target reference paths can be displayed in different display manners, or all target reference paths form a reference path graph, such as a tree diagram, or messages in the same target reference path are displayed in the same thumbnail, and different target reference paths correspond to different thumbnails. If there are a plurality of target reference paths, a plurality of thumbnails are displayed. In this embodiment, optionally, different display manners include but are not limited to the following manners. Fonts of messages in different target reference paths are identified by using different colors. Certainly, colors of messages in the same target reference path are the same, or messages in different target reference paths are identified by using different background colors, or messages in different target reference paths are identified by using different font sizes.

In some embodiments of this application, optionally, before the displaying the target reference paths, the method further includes: receiving an input of the user for triggering display of the target reference path. In other words, when messages in the target reference path are displayed, if there are a plurality of target reference paths, too many messages are displayed. To facilitate viewing, the user can perform input in the session interface to trigger display of the target reference path, to classify the displayed messages into target reference paths, so that the user can clearly distinguish between messages in different target reference paths.

Referring to FIG. 2, FIG. 2 is a schematic diagram of an option list according to an embodiment of this application. As shown in FIG. 2, in some embodiments of this application, the electronic device displays a session interface, and a plurality of messages are displayed in the session interface. If an input of the user for triggering display of the target reference path is received, for example, the input includes a sub-input of long pressing the first message, the electronic device displays an option list in response to the sub-input. The option list includes three options: "jump to a reference location", "view recent comments of the user", and "unfold reference relationships". The input of the user for triggering display of the target reference path further includes a sub-input of clicking the option of "unfold reference relationships", and then the electronic device displays all target reference paths in response to the sub-input.

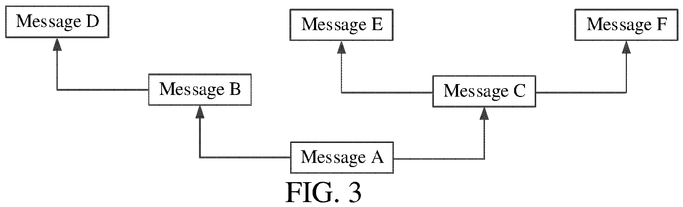

Referring to FIG. 3, FIG. 3 is a schematic diagram of a reference path graph according to an embodiment of this application. Optionally, in some embodiments of this application, a reference path graph including all the target reference paths may be displayed, and the user can easily view other messages associated with the first message. The reference path graph may be displayed in an original session interface in the form of thumbnails or displayed in a new window. As shown in FIG. 3, the reference path graph includes three target reference paths: message A-message B→message D, message A-message C-message E, and message A-message C-message F, where a direction of the arrow indicates a reference relationship. For example, in message A-message B, the arrow points to the message B, which indicates that the message B references the message A, that is, the arrow points to a referrer. The reference path graph is displayed, so that all messages associated with the first message can be summarized in the reference path graph, and the user can intuitively view a reference relationship between messages and specific content of each message.

In some other embodiments of this application, optionally, when the target reference path is displayed, messages in the same target reference path may also be displayed in the form of thumbnails. If there are a plurality of target reference paths, a corresponding quantity of thumbnails is displayed. The thumbnails may be displayed side by side, so that the user can select to expand any thumbnail to view specific content of all messages in the corresponding target reference path.

In some embodiments of this application, before the displaying messages that are in the target reference path, the method further includes:
receiving a second input of the user for configuring a quantity of displayed messages in the target reference path; and
the displaying messages that are in the target reference path includes:
   displaying a first target message in the target reference path, where the first target message is a first quantity of consecutive messages starting from the first message, and the first quantity is determined based on the second input.

In other words, in this embodiment of this application, optionally, the quantity of displayed messages in the target reference path may be a default value or may be set by the user. When the quantity of displayed messages in the target reference path is set by the user, before the messages in the target reference path are displayed, the user may manually configure the quantity of displayed messages in the target reference path through the second input. After configuration, when the messages in the target reference path are displayed, only the first target message in the target reference path is displayed, and the first target message is the first quantity of consecutive messages starting from the first message in the target reference path, that is, the first quantity is determined based on the second input. For example, the target reference path is message A-message B→message C-message D, and the first message corresponding to the first input of the user is the message A. If the display quantity configured by the user is 3, two messages are consecutively selected starting from the message A, that is, the message A, the message B, and the message C are displayed as the first target messages, where the first quantity plus 1 (the first message is counted) is the display quantity configured by the user.

In some embodiments of this application, in a case that there are at least two target reference paths, after the displaying the target reference paths, the method further includes:
receiving a third input of the user for a first target reference path; and
displaying messages that are in the first target reference path in response to the third input.

In this embodiment of this application, after all the target reference paths are displayed, because there are at least two target reference paths, interleaved reference relationships may make viewing difficult for the user. To facilitate the user to view messages in a specific target reference path, the user may select only one specific target reference path for viewing. Specifically, the electronic device receives the third input of the user for the first target reference path, for example, the third input is an input for a message in the first target reference path identified by a specific color, the third input is an input of clicking a thumbnail corresponding to the first target reference path, or the like. This is not specifically limited in this application. Then, the electronic device filters out all the messages in the first target reference path in response to the third input, and all the messages only in the first target reference path are displayed, for example, in a new window in the form of a pop-up window. Therefore, all messages other than those in the first target reference path are filtered out, so that the user can view only the messages in the first target reference path, and viewing efficiency is improved.

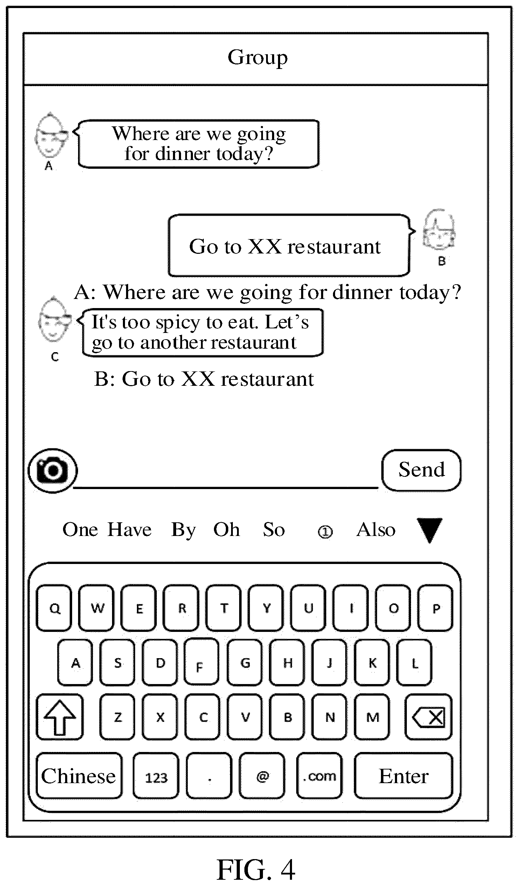

Referring to FIG. 4, FIG. 4 is a schematic diagram of a message in a first target reference path according to an embodiment of this application. As shown in FIG. 4, other information in the session interface has been filtered out, and only the messages in the first target reference path are displayed, so that the user can quickly view and learn of a discussion situation of a related topic.

In some embodiments of this application, after the displaying the target reference paths, the method further includes:
receiving a fourth input of the user for a second target message in a second target reference path; and
adding note information to the second target message and saving the second target reference path and the note information in response to the fourth input.

In this embodiment of this application, the user may operate a message in any target reference path to add comment information, a label, and other content, so as to facilitate subsequent browsing or quick referencing. For example, the electronic device receives the fourth input of the user for the second target message in the second target reference path, for example, the fourth input is an input of editing the note information through long pressing the target message, the fourth input is an input of editing the note information through double-clicking the target message, or the like. This is not specifically limited in this embodiment of this application. Then, the electronic device adds the note information to the second target message and saves the second target reference path and the note information in association in response to the fourth input. The note information may be comment information and/or a label, where the comment information is used to explain the second target message, and the label is used to mark the second target message. Therefore, if the second target message is to be referenced later, reference may be directly implemented through the label, and these labels may be displayed in the edit box of the session interface for the user to select, thereby implementing reference of a corresponding message.

In some other embodiments of this application, after the adding note information to the second target message and saving the second target reference path and the note information in response to the fourth input, the method further includes:
receiving a fifth input of the user for searching a search bar of the session interface for the note information; and
displaying messages in the second target reference path in response to the fifth input.

In this embodiment, after the note information is added to the second target message, if the fifth input of the user for searching the search bar of the session interface for the note information is received, for example, the fifth input is inputting a keyword corresponding to the note information in the search bar, the electronic device displays the messages in the second target reference path in response to the fifth input, to facilitate the user to quickly find a corresponding target reference path and related messages through the note message and implement quick browsing or quick referencing.

In some embodiments of this application, after the filtering and displaying messages that are in the first target reference path, the method further includes:
receiving a sixth input of the user, where the sixth input includes a first sub-input for any message in the first target reference path and a second sub-input of editing and sending a second message in an input box of the session interface; and
sending the second message in response to the sixth input, where the second message references first referenced content, and the first referenced content includes all messages in the first target reference path. To be specific, after the messages in the first target reference path are displayed, the user can simultaneously reference all the messages in the first target reference path. Specifically, the electronic device receives the sixth input of the user, where the sixth input includes a first sub-input for any message in the first target reference path. For example, the first sub-input may be an input of long pressing any message in the first target reference path, the first sub-input is an input of clicking a reference control displayed together with the messages in the first target reference path, or the like. This is not specifically limited in this embodiment of this application. Then the electronic device adds all the messages in the first target reference path as the first referenced content to a reference area of the input box of the session interface in response to the first sub-input. The sixth input further includes the second sub-input of editing and sending the second message in the input box of the session interface. The electronic device sends the second message in response to the second sub-input, and the second message references the first referenced content including all the messages in the first target reference path, so that the second message can reference the first referenced content quickly.

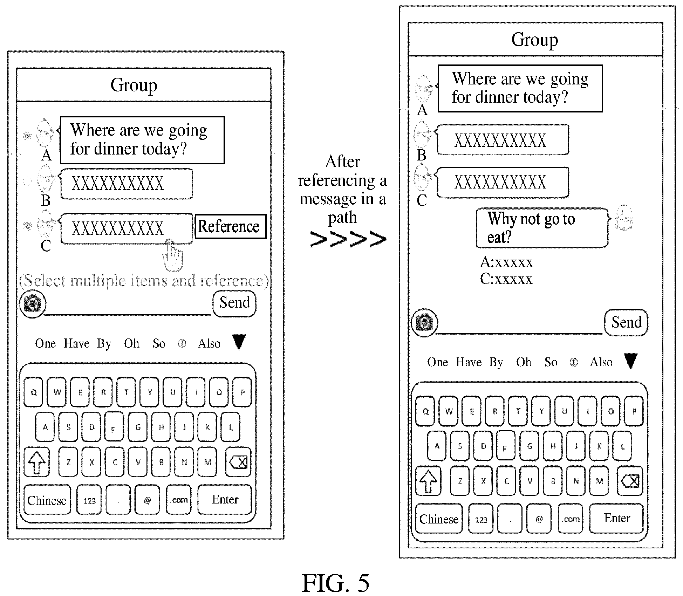

Referring to FIG. 5, FIG. 5 is a schematic diagram of a second message and first referenced content according to an embodiment of this application. As shown in FIG. 5, the user may long press a message in the first target reference path and click a reference button, so that after the second message is edited and sent, all the messages in the first target reference path form the first referenced content and are referenced by the second message. Optionally, when content of the first referenced content is large, part of the content may be folded up, and the user can operate later to unfold the content for display.

In some embodiments of this application, the method further includes:
receiving a seventh input of the user, where the seventh input includes a third sub-input for a target text fragment in at least one message in the session interface and a fourth sub-input of editing and sending a third message in an input box of the session interface; and
sending the third message in response to the seventh input, where the third message references second referenced content, and the second referenced content includes the target text fragment in the at least one message.

For example, a reference mode can be triggered in the session interface, and in the reference mode, part of the content can be referenced by selecting the target text fragment in the at least one message in the session interface. Specifically, the electronic device receives the seventh input of the user, where the seventh input may include the third sub-input for the target text fragment in the at least one message in the session interface. For example, the third sub-input is an input of dragging a cursor to select the target text fragment in the message, and the selected target text fragment is highlighted or marked with a specific color, or the third sub-input is an input of dragging the target text fragment to a preset area after selecting the target text fragment in the message, and the preset area may be a reference area in the session interface. Then, the electronic device adds the target text fragment in the at least one message to the reference area as second referenced content in response to the third sub-input. The second referenced content includes target text fragments in at least one message arranged in a time sequence of messages corresponding to the target text fragments. The seventh input further includes a fourth sub-input of the user editing and sending the third message in the input box. The electronic device sends the third message in response to the fourth sub-input, and the third message references second referenced content including the target text fragment in the at least one message selected by the user, so that the third message can quickly reference the second referenced content, and the second referenced content is only part of content of the message. In this way, when there is a large amount of content of the message corresponding to the referenced target text fragment, a receiver can quickly learn of core content of the referenced message in a manner of partial reference.

In some embodiments of this application, after the sending the third message, the method further includes:
displaying part of the target text fragments in the sent second referenced content and the third message in the session interface;
receiving an eleventh input of the user for the part of the target text fragments in the second referenced content; and
displaying all the target text fragments in the second referenced content in response to the eleventh input.

In other words, if there are a large amount of target text fragments in the second referenced content, some target text fragments may be folded, for example, only target text fragments located at the first and last positions are displayed, and a folding control can be displayed next to the second referenced content. The user can unfold and display all the target text fragments in the second referenced content by clicking the folding control, or click the folding control again to fold some target text fragments.

In some other embodiments of this application, the method further includes:
receiving an eighth input of the user for dragging a fourth message in the session interface to a location of a sent fifth message; and
using the fourth message as third referenced content of the fifth message and resending the fifth message and the third referenced content in response to the eighth input.

In this embodiment of this application, for a message that has been sent and does not reference other messages, the user may add references to the message by dragging or in other manners. Specifically, the sent fifth message may be displayed in the session interface. If the electronic device receives the eighth input of the user for dragging the fourth message in the session interface to the location of the sent fifth message, where the eighth input may be an input that enables the fourth message to at least partially overlap with the fifth message, the electronic device uses the fourth message as third referenced content of the fifth message in response to the eighth input, and resends the fifth message and the third referenced content. Therefore, the user does not need a tedious process of withdrawing the fifth message, re-editing the fifth message and adding the fourth message as a reference message, and for the receiver, only the third referenced content needs to be refreshed and displayed below the fifth message that has been received before.

In some embodiments of this application, the method further includes:
receiving a ninth input of the user for the first message; and
jumping to and displaying an original location of the first message in response to the ninth input.

In this embodiment, the user may operate the first message to directly switch the content in the session interface to contexts of the first message. For example, the electronic device receives the ninth input of the user for the first message. For example, the ninth input is an input of long pressing the first message and selecting an option of jumping to the reference location in a displayed option list, or another preset input. This is not specifically limited in this embodiment of this application. Then, the electronic device jumps to and displays the original location of the first message in response to the ninth input, so that the user can quickly view the contexts of the first message and then grasp a discussion situation of a related topic.

As shown in FIG. 2, in some embodiments of this application, the electronic device displays a session interface, and a plurality of messages are displayed in the session interface. If the ninth input of the user for the first message is received, for example, the ninth input includes a fifth sub-input and a sixth sub-input, where the fifth sub-input is an input of long pressing the first message, the electronic device displays an option list in response to the fifth sub-input. The option list includes three options: "jump to a reference location", "view recent comments of the user", and "unfold reference relationships". The sixth sub-input is an input of clicking the option of "jump to a reference location", and then the electronic device locates the original location of the first message to display the first message and the contexts thereof in response to the sixth sub-input.

In some other embodiments of this application, the method further includes:
receiving a tenth input of the user for the first message; and
displaying at least part of all messages sent by a sender of the first message in response to the tenth input.

In other words, in this embodiment of this application, all message records recently sent by the sender of a specific message may be filtered out and displayed. For example, the electronic device receives the tenth input of the user for the first message. For example, the tenth input is an input of long pressing the first message and selecting the option of "view recent comments of the user" in the displayed option list, or another preset input. This is not specifically limited in this embodiment of this application. Then the electronic device displays part or all of the messages sent by the sender of the first message in response to the tenth input, so that the user can quickly view content such as explanation for the first message from the sender of the first message. At least part of all the messages sent by the sender of the first message can be displayed in a new interface, and the user clicks a back button to exit the interface and returns to the current session interface.

As shown in FIG. 2, in some embodiments of this application, the electronic device displays a session interface, and a plurality of messages are displayed in the session interface. If the tenth input of the user for the first message is received, for example, the tenth input includes a seventh sub-input and an eighth sub-input, where the seventh sub-input is an input of long pressing the first message, the electronic device displays an option list in response to the seventh sub-input. The option list includes three options: "jump to a reference location", "view recent comments of the user", and "unfold reference relationships". The eighth sub-input is an input of clicking the option of "view recent comments of the user", and then the electronic device displays part or all of the messages sent by the sender of the first message in response to the eighth sub-input.

In some still other embodiments of this application, the method further includes:
identifying a message in the session interface with a referenced quantity exceeding a preset threshold.

For example, the message with the referenced quantity exceeding the preset threshold has a high discussion degree in a topic corresponding to the message. Therefore, the message is identified in the session interface, so that it is convenient for the user to quickly learn of the important topic from a large quantity of messages. The message with the referenced quantity exceeding the preset threshold in the session interface may be highlighted for identifying, or a font size thereof may be increased. This is not specifically limited in this embodiment of this application.

In conclusion, in this embodiment of this application, the first input for the first message referenced by other messages in the session interface is received, so that all the target reference paths including the first message can be automatically found and displayed. In this way, the user can easily and intuitively view the reference relationship corresponding to the first message and contexts that are in a reference relationship with the first message, so that the user can quickly learn of the discussion situation of the topic related to the first message.

It should be noted that the message processing method provided in this embodiment of this application may be performed by a message processing apparatus, or a control module in the message processing apparatus for performing the message processing method. In this embodiment of this application, an example in which the message processing apparatus performs the message processing method is used to describe the message processing apparatus provided in this embodiment of this application.

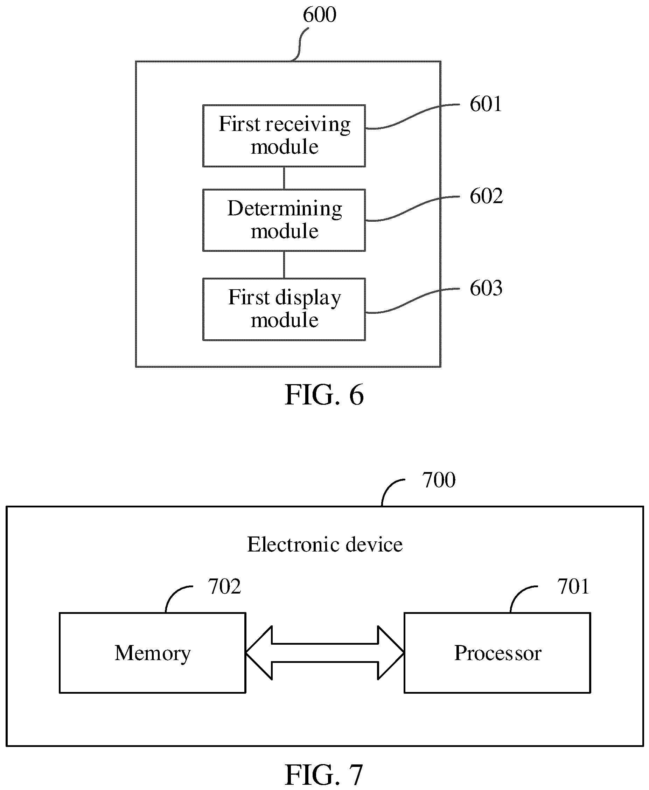

Referring to FIG. 6, FIG. 6 is a schematic diagram of a structure of a message processing apparatus according to an embodiment of this application. As shown in FIG. 6, another embodiment of this application further provides a message processing apparatus, and the apparatus 600 includes:
a first receiving module 601, configured to receive a first input of a user for a first message in a session interface;
a determining module 602, configured to: in response to the first input, determine a target reference path associated with the first message, where each of the target reference paths includes at least two messages, the at least two messages are in a reference and referenced relationship, and one message in each of the target reference paths is the first message; and
a first display module 603, configured to display messages that are in the target reference path.

Optionally, in a case that there are at least two target reference paths, the apparatus further includes:
a second display module, configured to display the target reference path; and
the second display module includes:
   a first display unit, configured to display messages in the different target reference paths in different display manners; or
   a second display unit, configured to display a reference path graph including all the target reference paths; or
   a third display unit, configured to display messages in the same target reference path within a same thumbnail.

Optionally, the apparatus further includes:
a second receiving module, configured to receive a second input of the user for configuring a quantity of displayed messages in the target reference path; and
the first display module includes:
   a fourth display unit, configured to display a first target message in the target reference path, where the first target message is a first number of consecutive messages starting from the first message, and the first number is determined based on the second input.

Optionally, in a case that there are at least two target reference paths, the apparatus further includes:
a third receiving module, configured to receive a third input of the user for a first target reference path; and
a third display module, configured to display messages that are in the first target reference path in response to the third input.

Optionally, the apparatus further includes:
a fourth receiving module, configured to receive a fourth input of the user for a second target message in a second target reference path; and
an adding module, configured to: add note information to the second target message and save the second target reference path and the note information in response to the fourth input.

Optionally, the apparatus further includes:
a fifth receiving module, configured to receive a fifth input of the user searching a search bar of the session interface for the note information; and
a fourth display module, configured to display messages in the second target reference path in response to the fifth input.

Optionally, the apparatus further includes:
a sixth receiving module, configured to receive a sixth input of the user, where the sixth input includes a first sub-input for any message in the first target reference path and a second sub-input of editing and sending a second message in an input box of the session interface; and
a first sending module, configured to send the second message in response to the sixth input, where the second message references first referenced content, and the first referenced content includes all messages in the first target reference path.

Optionally, the apparatus further includes:
a seventh receiving module, configured to receive a seventh input of the user, where the seventh input includes a third sub-input for a target text fragment in at least one message in the session interface and a fourth sub-input of editing and sending a third message in an input box of the session interface; and
a second sending module, configured to send the third message in response to the seventh input, where the third message references second referenced content, and the second referenced content includes the target text fragment in the at least one message.

Optionally, the apparatus further includes:
an eighth receiving module, configured to receive an eighth input of the user dragging a fourth message in the session interface to a location of a sent fifth message; and
a third sending module, configured to: use the fourth message as third referenced content of the fifth message and resend the fifth message and the third referenced content in response to the eighth input.

Optionally, the apparatus further includes:
a ninth receiving module, configured to receive a ninth input of the user for the first message; and
a fifth display module, configured to: jump to and display an original location of the first message in response to the ninth input.

Optionally, the apparatus further includes:
a tenth receiving module, configured to receive a tenth input of the user for the first message; and
a sixth display module, configured to display at least part of all messages sent by a sender of the first message in response to the tenth input.

In this embodiment of this application, the first input for the first message referenced by other messages in the session interface is received, so that all the target reference paths including the first message can be automatically found and displayed. In this way, the user can easily and intuitively view the reference relationship corresponding to the first message and contexts that are in a reference relationship with the first message, so that the user can quickly learn of the discussion situation of the topic related to the first message.

The message processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a personal computer (personal computer, PC) or the like. This is not specifically limited in this embodiment of this application.

The message processing apparatus in this embodiment of this application may be an apparatus with an operating system. The operating system may be an Android (Android) operating system, an iOS operating system, or other possible operating systems. This is not specifically limited in this embodiment of this application.

The message processing apparatus provided in this embodiment of this application can implement processes implemented in the method embodiment of FIG. 1 to FIG. 5. To avoid repetition, details are not described herein again.

Optionally, as shown in FIG. 7, an embodiment of this application further provides an electronic device 700, including a processor 701, a memory 702, and a program or an instruction stored in the memory 702 and runnable on the processor 701. When the program or the instruction is executed by the processor 701, the processes of the foregoing message processing method embodiments are implemented, and a same technical effect can be achieved. To avoid repetition, details are not repeated herein again.

It should be noted that the electronic device in this embodiment of this application includes the foregoing mobile electronic device and the foregoing non-mobile electronic device.

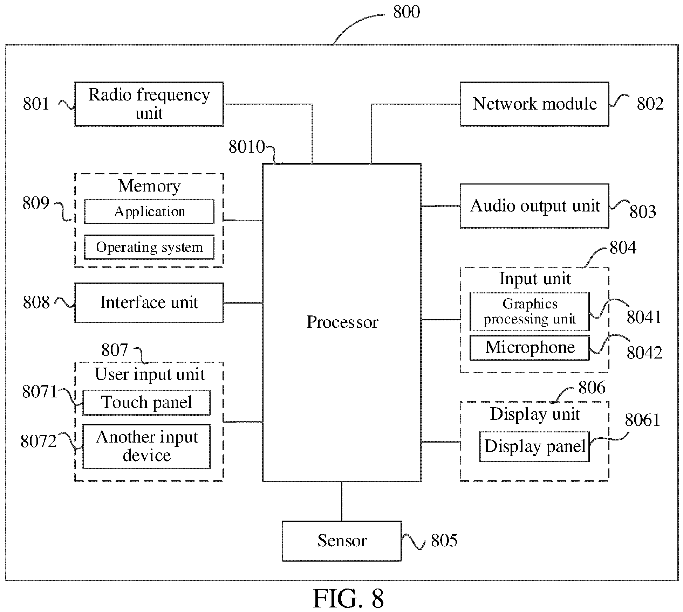

FIG. 8 is a schematic diagram of a hardware structure of an electronic device according to an embodiment of this application.

The electronic device 800 includes but is not limited to components such as a radio frequency unit 801, a network module 802, an audio output unit 803, an input unit 804, a sensor 805, a display unit 806, a user input unit 807, an interface unit 808, a memory 809, and a processor 8010.

A person skilled in the art can understand that the electronic device 800 may further include a power supply (such as a battery) that supplies power to each component. The power supply may be logically connected to the processor 8010 by using a power supply management system, to implement functions such as charging and discharging management, and power consumption management by using the power supply management system. The electronic device is not limited to the electronic device structure shown in FIG. 8. The electronic device may include more or fewer components than those shown in the figure, or combine some components, or have a different component arrangement. Details are not described herein again.

The user input unit 807 is configured to receive a first input of a user for a first message in a session interface;
the processor 8010 is configured to determine, in response to the first input, a target reference path associated with the first message, where each of the target reference paths includes at least two messages, the at least two messages are in a reference and referenced relationship, and one message in each of the target reference paths is the first message; and
the display unit 806 is configured to display messages that are in the target reference path.

In this embodiment of this application, the first input for the first message referenced by other messages in the session interface is received, so that all the target reference paths including the first message can be automatically found and displayed. In this way, the user can easily and intuitively view the reference relationship corresponding to the first message and contexts that are in a reference relationship with the first message, so that the user can quickly learn of the discussion situation of the topic related to the first message.

Optionally, in a case that there are at least two target reference paths, the display unit 806 is further configured to:
display the target reference paths, and the displaying the target reference paths includes:
displaying messages in the different target reference paths in different display manners; or
displaying a reference path graph including all the target reference paths; or
displaying messages in the same target reference path within a same thumbnail.

Optionally, the user input unit 807 is further configured to: before displaying messages on the target reference path, receive a second input of the user for configuring a quantity of displayed messages in the target reference path; and
the display unit 806 is further configured to display a first target message in the target reference path, where the first target message is a first number of consecutive messages starting from the first message, and the first number is determined based on the second input.

Optionally, in a case that there are at least two target reference paths, the user input unit 807 is further configured to receive a third input of the user for a first target reference path; and
the display unit 806 is further configured to display messages that are in the first target reference path in response to the third input.

Optionally, the user input unit 807 is further configured to receive a fourth input of the user for a second target message in a second target reference path;
the processor 8010 is further configured to add note information to the second target message in response to the fourth input; and
the memory 809 is configured to save the second target reference path and the note information.

Optionally, the user input unit 807 is further configured to receive a fifth input of the user searching a search bar of the session interface for the note information; and
the display unit 806 is further configured to display messages in the second target reference path in response to the fifth input.

Optionally, the user input unit 807 is further configured to receive a sixth input of the user, where the sixth input includes a first sub-input for any message in the first target reference path and a second sub-input of editing and sending a second message in an input box of the session interface;
the network module 802 is configured to send the second message in response to the sixth input, where the second message references first referenced content, and the first referenced content includes all messages in the first target reference path. Optionally, the user input unit 807 is further configured to receive a seventh input of the user, where the seventh input includes a third sub-input for a target text fragment in at least one message in the session interface and a fourth sub-input of editing and sending a third message in an input box of the session interface; and
the network module 802 is configured to send the third message in response to the seventh input, where the third message references second referenced content, and the second referenced content includes the target text fragment in the at least one message.

Optionally, the user input unit 807 is further configured to receive an eighth input of the user dragging a fourth message in the session interface to a location of a sent fifth message; and
the network module 802 is configured to: use the fourth message as third referenced content of the fifth message and resend the fifth message and the third referenced content in response to the eighth input.

Optionally, the user input unit 807 is further configured to receive a ninth input of the user for the first message.

Optionally, the display unit 806 is further configured to: jump to and display an original location of the first message in response to the ninth input.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein again. The memory 809 may be configured to store a software program and various data, including but not limited to an application and an operating system. An application processor and a modem processor may be integrated into the processor 8010, the application processor mainly processes an operating system, a user interface, an application, and the like, and the modem processor mainly processes wireless communication. It can be understood that, alternatively, the modem processor may not be integrated into the processor 8010.

An embodiment of this application further provides a readable storage medium. The readable storage medium stores a program or an instruction, and when the program or the instruction is executed by a processor, the processes of the foregoing message processing method embodiment are implemented, and a same technical effect can be achieved. To avoid repetition, details are not described herein again.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communications interface, the communications interface is coupled to the processor, and the processor is configured to run a program or an instruction to implement the processes of the messages processing method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

It should be noted that in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A message processing method, comprising:
receiving a first input of a user for a first message in a session interface;
in response to the first input, determining a target reference path associated with the first message, wherein each of the target reference paths comprises at least two messages, the at least two messages are in a reference and referenced relationship, and one message in each of the target reference paths is the first message; and
displaying messages that are in the target reference path.

2. The method according to claim 1, wherein in a case that there are at least two target reference paths, after the determining a target reference path associated with the first message, the method further comprises:
displaying the target reference paths; and
the displaying the target reference paths comprises:
displaying messages in different target reference paths in different display manners for differentiation; or
displaying a reference path graph comprising all the target reference paths; or
displaying messages in a same target reference path within a same thumbnail.

3. The method according to claim 1, wherein before the displaying messages that are in the target reference path, the method further comprises:
receiving a second input of the user for configuring a quantity of displayed messages in the target reference path; and
the displaying messages that are in the target reference path comprises:
displaying a first target message in the target reference path, wherein the first target message is a first quantity of consecutive messages starting from the first message, and the first quantity is determined based on the second input.

4. The method according to claim 2, wherein in a case that there are at least two target reference paths, after the displaying the target reference paths, the method further comprises:
receiving a third input of the user for a first target reference path; and
displaying messages that are in the first target reference path in response to the third input.

5. The method according to claim 2, wherein after the displaying the target reference paths, the method further comprises:
receiving a fourth input of the user for a second target message in a second target reference path; and
adding note information to the second target message and saving the second target reference path and the note information in response to the fourth input.

6. The method according to claim 5, wherein after the adding note information to the second target message and saving the second target reference path and the note information in response to the fourth input, the method further comprises:
receiving a fifth input of the user for searching a search bar in the session interface for the note information; and
displaying messages in the second target reference path in response to the fifth input.

7. The method according to claim 4, wherein after the displaying messages that are in the first target reference path, the method further comprises:
receiving a sixth input of the user, wherein the sixth input comprises a first sub-input for any message in the first target reference path and a second sub-input for editing and sending a second message in an input box in the session interface; and
sending the second message in response to the sixth input, wherein the second message references first referenced content, and the first referenced content comprises all messages in the first target reference path.

8. The method according to claim 1, further comprising:
receiving a seventh input of the user, wherein the seventh input comprises a third sub-input for a target text fragment in at least one message in the session interface and a fourth sub-input for editing and sending a third message in an input box in the session interface; and
sending the third message in response to the seventh input, wherein the third message references second referenced content, and the second referenced content comprises the target text fragment in the at least one message.

9. The method according to claim 1, further comprising:
receiving an eighth input of the user for dragging a fourth message in the session interface to a location of a sent fifth message; and
using the fourth message as third referenced content of the fifth message and resending the fifth message and the third referenced content in response to the eighth input.

10. A message processing apparatus, comprising:
a first receiving module, configured to receive a first input of a user for a first message in a session interface;
a determining module, configured to: in response to the first input, determine a target reference path associated with the first message, wherein each of the target reference paths comprises at least two messages, the at least two messages are in a reference and referenced relationship, and one message in each of the target reference paths is the first message; and
a first display module, configured to display messages that are in the target reference path.

11. An electronic device, comprising a processor, a memory, and a program or an instruction stored in the memory and runnable on the processor, wherein the program or the instruction, when being executed by the processor, implements the steps of the method according to any one of claims 1 to 9.

12. A readable storage medium, storing a program or an instruction, wherein the program or the instruction, when being executed by a processor, implements the steps of the method according to any one of claims 1 to 9.

13. A chip, wherein the chip comprises a processor and a communications interface, the communications interface is coupled to the processor, and the processor is configured to run a program or an instruction to implement the method according to any one of claims 1 to 9.

14. A computer program product, wherein the computer program product is stored in a non-transient storage medium, and the computer program product is executed by at least one processor to implement the method according to any one of claims 1 to 9.
